(19) Europäisches Patentamt / European Patent Office / Office européen des brevets

(11) **EP 4 379 308 B1**

(12) **EUROPEAN PATENT SPECIFICATION**

(45) Date of publication and mention
of the grant of the patent:
**04.03.2026 Bulletin 2026/10**

(21) Application number: **23204072.5**

(22) Date of filing: **17.10.2023**

(51) International Patent Classification (IPC):
**F41G 3/06** *(2006.01)* **F41G 3/08** *(2006.01)*
**G01S 17/08** *(2006.01)* **G01S 17/86** *(2020.01)*

(52) Cooperative Patent Classification (CPC):
**F41G 3/06; F41G 3/08; G01S 17/08; G01S 17/86;**
**Y02A 90/10**

(54) **TELESCOPE RANGE FINDER BASED ON THERMAL IMAGE-WIND SPEED-NOISE AND RANGING METHOD THEREOF**

TELESKOPENTFERNUNGSMESSER AUF DER BASIS VON THERMISCHEM BILDWINDGESCHWINDIGKEITSRAUSCHEN UND ENTFERNUNGSMESSVERFAHREN DAFÜR

TÉLÉMÈTRE TÉLÉSCOPIQUE BASÉ SUR UN BRUIT DE VITESSE DU VENT D'IMAGE THERMIQUE ET SON PROCÉDÉ DE TÉLÉMÉTRIE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.12.2022 CN 202211537449**

(43) Date of publication of application:
**05.06.2024 Bulletin 2024/23**

(73) Proprietor: **Sndway Technology (Guangdong) Co., Ltd.**
**Dongguan Guangdong (CN)**

(72) Inventors:
• **LIANG, Wu**
**Dongguan, Guangdong (CN)**
• **HE, Gang**
**Dongguan, Guangdong (CN)**

(74) Representative: **Herrero & Asociados, S.L.**
**Edificio Aqua - Calle Agustín de Foxá, 4-10, 2ºA**
**28036 Madrid (ES)**

(56) References cited:
**US-A1- 2004 231 220** **US-A1- 2014 063 261**
**US-A1- 2015 369 565** **US-A1- 2016 069 644**
**US-A1- 2017 115 096** **US-A1- 2019 377 171**

## Description

### TECHNICAL FIELD

The disclosure relates to the field of laser ranging technologies, particularly to a telescope range finder based on thermal image-wind speed-noise and a ranging method thereof.

### BACKGROUND

For hunting activities, in a process of hunting at night, because there is no light source, it is difficult to capture a prey, and a traditional telescope range finder needs to rely on an external light source to identify the prey. In addition, in a process of hunting in windy weather, a wind direction and a wind speed will change in real time, which results in a great deviation in a shooting trajectory. In this case, if a hunter relies on his body perception and his own experience to compensate the shooting trajectory, a big error will occur and the wind speed cannot be accurately measured, thereby leading to the loss of the prey. Moreover, in a process of hunting, some preys are aggressive, and the hunter's energy is focused on the prey, so the hunter often ignores the safety of his surrounding environment.

Chinese patent publication CN 115531845 B discloses a telescope range finder based on thermal wind speed and a ranging method, where the range finder includes a range finder body and a wind speed measuring device. The wind speed measuring device includes a thermal wind speed probe, a processing unit, a movable rod, and a fixing device. The thermal wind speed probe can freely expand and contract with the help of the movable rod. When thermal wind speed probe retracts, it shrinks in the fixing device. The fixing device is installed and fixed at a first side of the range finder body. The processing unit is electrically connected to the thermal wind speed probe and a control device in the range finder body. The processing unit is located in the fixing device or integrated in the control device of the range finder body. A second side of the range finder body is provided with a mode switching button which is electrically connected to the control device. The second side is opposite to the first side. The telescope range finder in this patent publication can measure accurately a wind speed through the thermal wind speed probe and can help a golfer to plan a more effective hitting distance and a more effective ball path through compensating the hitting distance based on the wind speed.

At present, there is no telescope device for trajectory ranging with wind speed compensation function for hunting in the market. In view of this, the disclosure proposes a telescope range finder based on thermal image-wind speed-noise and a ranging method thereof to solve related technical problems.

US20150369565A1 discloses an optical device, such as a firearm scope or telescope, which includes an aperture to receive light, and a light separation element to split the light received from the aperture into a plurality of light paths directed to a plurality of sensors. Sensors may include bright light sensors, low light sensors, range-finder sensors, or other sensors. The light may be separated and directed to the various sensors using prisms, light filters, mirrors, or any combination thereof. The optical device may include circuitry configured to generate image data, determine range data, perform a ballistics calculation, or to perform other operations based on the plurality of sensors.

US20140063261A1 discloses portable laser rangefinders, which include an objective lens situated to form an image of a distant object on an image sensor. The image sensor is coupled to a display that produces a corresponding displayed image that can be viewed directly by a user, or viewed using an eye piece. A transmitter directs a probe beam to a target, and a returned portion of the probe beam is detected to estimate target distance or target speed. An image processor is coupled to the image sensor and the display so as to provide a digital image.

### SUMMARY

With respect to the shortcomings of the related art, objectives of the disclosure are to provide a telescope range finder based on thermal image-wind speed-noise and a ranging method thereof, which are used for solving the problem that due to large shooting error caused by wind in a trajectory in a process of hunting, a targeted prey cannot be hit, and for solving the safety problem of a hunter in the process of hunting.

In order to achieve the above objectives, the disclosure provides a telescope range finder based on thermal image-wind speed-noise and a ranging method, according to the independent claims. The invention is set out in the appended set of claims.

Preferred embodiments are mirrored by the dependent claims.

Compared with the related art, the disclosure has the following beneficial effects.

(1) In the disclosure, a wind speed at a current moment is accurately calculated through the arrangement of the wind wheel and the tachometer, a real-time distance of the shooting trajectory can be corrected at any time, and shooting times are reduced; and compared with the wind speed sensed by a human body, the wind speed compensation distance measured by the wind wheel driving the tachometer is more stable.

(2) In the disclosure, through the setting of the thermal image sensor, the infrared signal of the prey is obtained and transmitted to the display through the processor for display, so that a range where the prey is located can be monitored in real time, and a detection range of the prey is reduced; and when hunting at night, the hunting can be carried out smoothly without light, and the recognition ability of the prey is strong.

(3) In the disclosure, by setting the noise alarm value through the processor, the noise alarm value is compared with the noise value obtained through processing a noise collected by the microphone, and when the noise value is greater than the noise alarm value, it indicates that the prey is approaching the hunter, and the screen of the display flashes, so that the hunter can be reminded, and in case of danger, the hunter can escape quickly to ensure the safety of the hunter.

(4) In the disclosure, under the condition of ensuring the hunter's safety, the real-time movement of the prey is displayed on the display through the noise measuring device, so that the ability of catching the prey is strong, and the shooting distance is compensated through the wind speed measuring device, so that the hunter can design a better shooting trajectory, which is suitable for any shooting occasion.

## BRIEF DESCRIPTION OF DRAWINGS

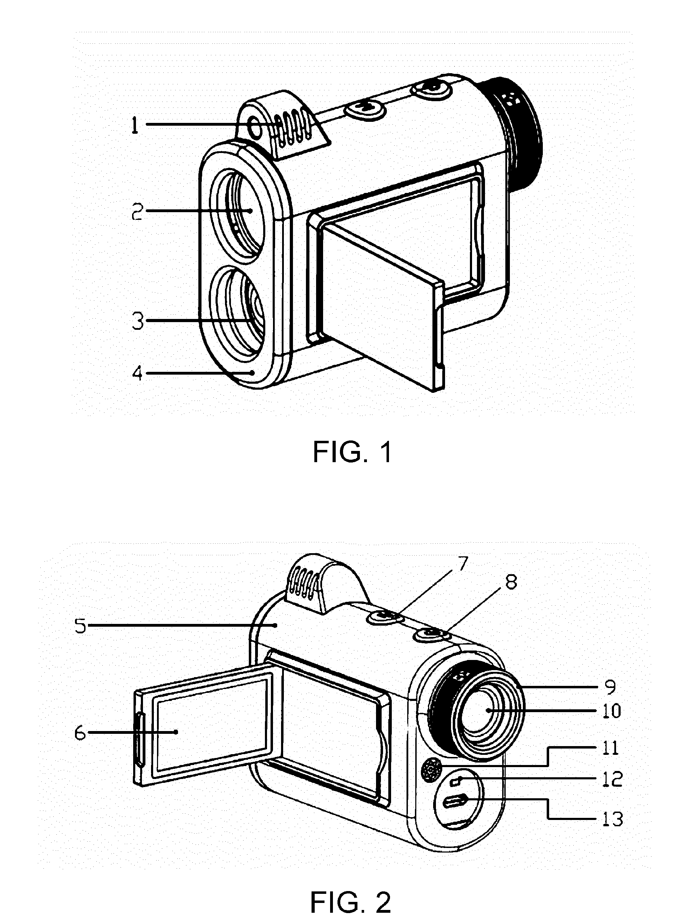

FIG. 1 illustrates a schematic structural view of a telescope range finder based on thermal image-wind speed-noise according to an embodiment of the disclosure.

FIG. 2 illustrates a schematic structural view of another telescope range finder based on thermal image -wind speed-noise according to another embodiment of the disclosure.

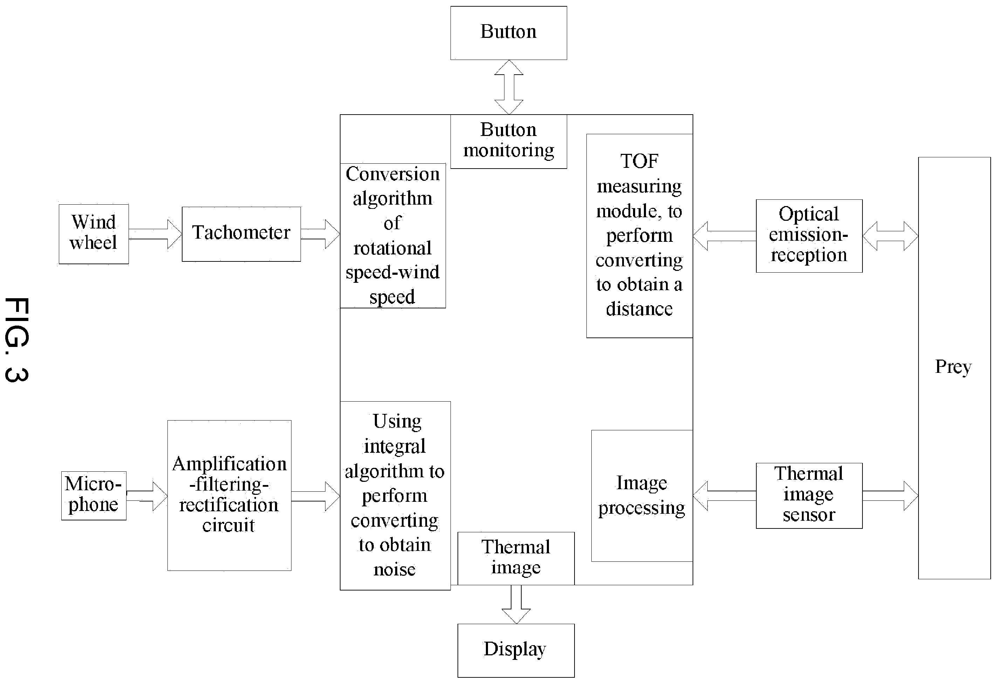

FIG. 3 illustrates a schematic view of an overall design framework of a support loop assembly of a telescope range finder based on thermal image wind-speed-noise according to an embodiment of the disclosure.

## DETAILED DESCRIPTION OF EMBODIMENTS

### First embodiment

A first embodiment of the disclosure provides a telescope range finder based on thermal image-wind speed-noise, which includes a range finder body. One side of a top portion of the range finder body is provided with a wind speed measuring device, the other side of the top portion of the range finder body is provided with a measurement mode component, a front end of the range finder body is provided with a noise measuring device, and a side of the range finder body is provided with a thermal image display device.

The wind speed measuring device includes a frame, gaps are disposed on the frame, a wind wheel 1 is disposed in the frame, the wind wheel 1 is connected to a tachometer, and the tachometer is connected to a processor in the range finder body.

The processor is configured to: in response to rotating of the wind wheel 1, obtain a current wind speed according to the following calculation formula 1:

$$\text{Wind speed} = \text{rotational speed} \times k + b \quad (\text{formula 1})\,;$$

where the rotational speed represents data obtained by the tachometer, and k and b represent wind speed calibration parameters;

when 0 V < voltage $\leq$ 0.6 V, k= 11.2 and b = -0.72;

when 0.6 V < voltage $\leq$ 1.5 V, k=10.3 and b = -0.18;

when voltage > 1.5 V, k = 9.8 and b = 0.57.

The noise measuring device includes a microphone 11, and the microphone 11 is connected to an amplification-filtering-rectification circuit. The amplification-filtering-rectification circuit is connected to the processor. The microphone 11 is configured to convert a noise into an electrical signal for entering the processor through the amplification-filtering-rectification circuit. The processor is configured to calculate a noise value of the noise, and a noise alarm value is set in the processor.

The thermal image display device includes a thermal image sensor, which is arranged in the range finder body. The thermal image sensor is connected to a display 6 through the processor. The display 6 is disposed at the side of the range finder body, and the display 6 is foldably connected to a surface of the range finder body.

A prey radiates an infrared thermal signal, which enter the thermal image sensor through a laser emitting objective lens 2. A thermal image is collected by the thermal image sensor, then the collected thermal image is processed by the processor, and finally displayed on the display 6. When a noise value obtained through calculating of a noise received by the microphone 11 by the processor is greater than the noise alarm value set by the processor, the display 6 flashes to remind the hunter that he in danger and he needs to escape quickly.

In an embodiment, the range finder body also includes an eyepiece 10 with an eyepiece adjustment 9 thereon. The eyepiece 10 is disposed at the front end of the range finder body, and an objective lens assembly is disposed at a rear end of the range finder body. A top cover 4 is disposed on the range finder body, and the top cover 4 is connected to a housing 5 of the range finder body for sealing.

A diopter of the eyepiece 10 can be adjusted through the eyepiece adjustment 9, so that different users can adjust the diopter based on their sights, and can see a distant situation in front clearly. There may be a display screen inside the eyepiece 10, which can display a aimed bull's-eye and measurement data.

The range finder body is also provided with a power supply assembly therein, the power supply assembly is configured to supply power to the whole of the telescope range finder. The power supply assembly includes a charging interface 13, a charging indicator light 12, a lithium battery charged by the charging interface 13 and a charging circuit. The charging interface 13 is configured to charge the lithium battery through the charging circuit.

When charging, a charging cable is connected to the charging interface 13, if the charging indicator light 12 is red, it means that the lithium battery is not fully charged, and if the charging indicator light 12 is green, it means that the lithium battery is fully charged.

In an embodiment, the measurement mode component includes two modes, including a basic distance measurement mode and a shooting compensation distance measurement mode. The measurement mode component includes a power-on measurement button 8 and a mode switching button 7. The measurement mode component is connected to a time-of-flight (TOF) measuring module, and the TOF measuring module is connected to the processor and the objective lens assembly.

The user can select the basic distance measurement mode and the shooting compensation distance measurement mode by short pressing the mode switching button 7, and can enter a setting menu by long pressing the mode switching button 7; and the user can control the telescope range finder to perform distance measurement by pressing the power-on measurement button 8, for one-time distance measurement by short pressing, and for continuous measurement by long pressing the power-on measurement button 8.

In an embodiment, the objective lens assembly includes a laser emitting objective lens 2 and a laser receiving objective lens 3, and the TOF measuring module is configured to measure a distance measured by the laser emitting objective lens 2 and the laser receiving objective lens 3.

When the processor sends out a measurement instruction, the measurement instruction excites the laser transmitting objective lens 2 to emit a laser to a prey, the laser is reflected and the reflected laser is received by the laser receiving objective lens 3, and then the TOF measuring module performs measuring to obtain the distance.

In an embodiment, when the shooting compensation distance measurement mode is triggered by a user, a shooting compensation distance is obtained according to a formula 3;

shooting compensation distance = target distance $\times$ k$\times$ (wind speed $\times$ target distance / m)     (formula 3)

k represents a shooting compensation coefficient, and m represent a proportional coefficient;

when target distance $\leq$50 m, k=1.0 and m = 2506;

when 50 m<target distance < target distance $\leq$200 m, k=1.06, and m = 8480;

when 200 m < target distance < target distance $\leq$500 m, k=1.12, and m = 28,000;

when target distance >500 m, k=1.21, and m =61256.25.

## Second embodiment

The second embodiment of the disclosure provides a ranging method of the telescope range finder based on thermal image-wind speed-noise described in the first embodiment, which includes the following steps:

S1, when the telescope range finder is turned on, initializing, by the processor of the telescope range finder, parameters of the telescope range finder, and collecting, by the thermal image sensor, a thermal image in front of the telescope range finder, and displaying the thermal image on the display 6 through the processor;

S2, selecting, by a user, a shooting compensation distance measurement mode or a basic distance measurement mode by triggering a mode switching button, to perform corresponding distance measurement, and to thereby obtain a target distance; and

S3, obtaining, by the wind speed measuring device, the wind speed in a current environment, and obtaining a final to-be-measured distance based on the wind speed.

In an embodiment, the parameters in S1 includes a working mode, a working frequency, a noise filtering parameter of a TOF measurement module, wind speed calibration parameters k and b, and a proportional coefficient m.
In an embodiment, the obtaining a final to-be-measured distance based on the wind speed in S3 includes:

in a situation that the wind speed in the current environment does not affect a shooting trajectory, taking the obtained target distance as the final to-be-measured distance;
in a situation that the wind speed in the current environment affects the shooting trajectory, calculating a shooting compensation distance based on the wind speed obtained by a wind wheel 1 and the target distance, and taking the shooting compensation distance as the final to-be-measured distance.

In an embodiment, a screen of the display 6 is configured to: in a situation that the noise value obtained through the electrical signal converted by the microphone 11 is greater than the noise alarm value set by the processor, flash in the current environment based on the thermal image on the display 6, to prompt a hunter to escape.
Basic concepts have been described above, and it is apparent that for those skilled in the art, the above detailed disclosure is merely exemplary, and does not constitute a limitation of this specification.
In addition, those skilled in the art can understand that various aspects of this specification can be illustrated and described by several patentable categories or situations, including any novel and useful process, machine, product or substance combination, or any novel and useful improvement thereof. Accordingly, various aspects of this specification can be completely executed by hardware, completely executed by software including firmware, resident software, and microcode, or executed by a combination of hardware and software. All the above hardware or software can be called "block", "module", "engine", "unit", "component" or "system". Furthermore, aspects of this specification may be embodied as a computer product in one or more computer-readable media, which includes computer-readable program code.

## Reference number list

1       Wind blade
2       Laser emitting objective lens
3       Laser receiving objective lens
4       Top cover
5       Housing
6       Display
7       Mode switching button
8       Power-on measurement button
9       Eyepiece adjustment
10      Eyepiece
11      Microphone
12      Charging indicator light
13      Charging interface

**Claims**

1. A telescope range finder, comprising a range finder body,

    a side of a top portion of the range finder body is provided with a wind speed measuring device, another side of the top portion of the range finder body is provided with a measurement mode component, **characterized in that**, the measurement mode component has a basic distance measurement mode and a shooting compensation distance measurement mode, the measurement mode component comprises a power-on measurement button (8) and a mode switching button (7), the power-on measurement button (8) is configured to control the telescope range finder to perform distance measurement, the mode switching button (7) is configured to select the basic distance measurement mode and the shooting compensation distance measurement mode, a front end of the range finder body is provided with a noise measuring device, and a side of the range finder body is provided with a thermal image display device;
    the wind speed measuring device comprises a frame, gaps are disposed on the frame, a wind wheel (1) is disposed in the frame, the wind wheel (1) is connected to a tachometer, and the tachometer is connected to a processor in the range finder body;
    the processor is configured to: in response to rotating of the wind wheel (1), obtain a wind speed at a current moment according to a formula 1:

    $$\text{wind speed} = \text{rotational speed} \times \text{k} + \text{b} \quad (\text{formula 1}) ;$$

    where the rotational speed represents data obtained by the tachometer, and k and b represent wind speed calibration parameters;
    the noise measuring device comprises a microphone (11), the microphone (11) is connected to an amplification-filtering-rectification circuit, the amplification-filtering-rectification circuit is connected to the processor, the microphone (11) is configured to convert a noise into an electrical signal for entering the processor through the amplification-filtering- rectification circuit, the processor is configured to calculate a noise value of the noise based on the electrical signal, a noise alarm value is set in the processor;
    the thermal image display device comprises a thermal image sensor, the thermal image sensor is disposed in the range finder body, the thermal image sensor is connected to a display (6) through the processor, the display (6) is disposed at the side of the range finder body, and the display (6) is foldably connected to a surface of the range finder body;
    the processor is further configured to: in response to the noise value of the noise being greater than the noise alarm value, control a screen of the display (6) to flash to prompt a hunter to escape;
    the processor is configured to: when the shooting compensation distance measurement mode is triggered, obtain a shooting compensation distance; and when the basic distance measurement mode is triggered, obtain a target distance;
    the range finder body further comprises an eyepiece (10) with an eyepiece adjustment (9) thereon, the eyepiece (10) is disposed at the front end of the range finder body, and an objective lens assembly is disposed at a rear end of the range finder body, a top cover (4) is disposed on the range finder body, and the top cover (4) is connected to a housing (5) of the range finder body for sealing;
    the measurement mode component is connected to a time-of-flight (TOF) measuring module, the TOF measuring module is connected to the processor and the objective lens assembly, and the TOF measuring module is configured to measure the target distance;
    when the shooting compensation distance measurement mode is triggered by a user, the shooting compensation distance is obtained according to a formula 3:

    shooting compensation distance = target distance $\times$ k$\times$ (wind speed $\times$ target distance / m)        (formula 3)

    where k represents a shooting compensation coefficient, and m represents a proportional coefficient.

2. The telescope range finder as claimed in claim 1,
    wherein the range finder body is also provided with a power supply assembly therein, the power supply assembly is configured to supply power to the whole of the telescope range finder, the power supply assembly comprises a charging interface (13), a charging indicator light (12), a lithium battery charged by the charging interface (13), and a charging circuit; and the charging interface (13) is configured to charge the lithium battery through the charging circuit.

3. A ranging method of using the telescope range finder as claimed in claim 1, comprising:

S1, when the telescope range finder is turned on, initializing, by the processor of the telescope range finder, parameters of the telescope range finder, collecting, by the thermal image sensor, a thermal image in front of the telescope range finder, and displaying the thermal image on the display (6) through the processor;

S2, selecting, by the user, the shooting compensation distance measurement mode or the basic distance measurement mode by triggering the mode switching button (7), to perform corresponding distance measurement, and to thereby obtain the target distance; and

S3, obtaining, by the wind speed measuring device, the wind speed in a current environment, and obtaining a final to-be-measured distance based on the wind speed;

wherein the obtaining a final to-be-measured distance based on the wind speed in S3 comprises:

in a situation that the wind speed in the current environment does not affect a shooting trajectory in a process of hunting, taking the target distance as the final to-be-measured distance;

in a situation that the wind speed in the current environment affects the shooting trajectory, calculating the shooting compensation distance based on the wind speed obtained by the wind wheel (1) and the target distance, and taking the shooting compensation distance as the final to-be-measured distance.

4. The ranging method of using the telescope range finder as claimed in claim 3, wherein the parameters in S1 comprises a working mode, a working frequency, a noise filtering parameter of the TOF measuring module, wind speed calibration parameters k and b, and the proportional coefficient m.

**Patentansprüche**

1. Ein Teleskop-Entfernungsmesser, umfassend einen Entfernungsmesser-Körper,

wobei eine Seite eines oberen Abschnitts des Entfernungsmesser-Körpers mit einer Windgeschwindigkeitsmesseinrichtung versehen ist, eine andere Seite des oberen Abschnitts des Entfernungsmesser-Körpers mit einer Messmodus-Komponente versehen ist,

**dadurch gekennzeichnet, dass**

die Messmodus-Komponente einen Basis-Entfernungsmessmodus und einen Schusskompensations-Entfernungsmessmodus aufweist, wobei die Messmodus-Komponente einen Einschalt-/Messknopf (8) und einen Modusumschaltknopf (7) umfasst, wobei der Einschalt-/Messknopf (8) konfiguriert ist, um den Teleskop-Entfernungsmesser zur Durchführung einer Entfernungsmessung zu steuern, der Modusumschaltknopf (7) konfiguriert ist, um den Basis-Entfernungsmessmodus und den Schusskompensations-Entfernungsmessmodus auszuwählen, ein vorderes Ende des Entfernungsmesser-Körpers mit einer Geräuschmesseinrichtung versehen ist und eine Seite des Entfernungsmesser-Körpers mit einer Wärmebild-Anzeigeeinrichtung versehen ist;

die Windgeschwindigkeitsmesseinrichtung einen Rahmen umfasst, wobei an dem Rahmen Zwischenräume angeordnet sind, ein Windrad (1) in dem Rahmen angeordnet ist, das Windrad (1) mit einem Tachometer verbunden ist und das Tachometer mit einem Prozessor in dem Entfernungsmesser-Körper verbunden ist;

der Prozessor konfiguriert ist, um: in Reaktion auf ein Drehen des Windrads (1) eine Windgeschwindigkeit zu einem aktuellen Zeitpunkt gemäß einer Formel 1 zu erhalten:

$$\text{Windgeschwindigkeit} = \text{Drehzahl} \times k + b \text{ (Formel 1);}$$

wobei die Drehzahl die durch das Tachometer erhaltenen Daten darstellt und k und b Windgeschwindigkeits-Kalibrierungsparameter darstellen;

die Geräuschmesseinrichtung ein Mikrofon (11) umfasst, das Mikrofon (11) mit einer Verstärkungs-Filterungs-Gleichrichtungsschaltung verbunden ist, die Verstärkungs-Filterungs-Gleichrichtungsschaltung mit dem Prozessor verbunden ist, das Mikrofon (11) konfiguriert ist, um ein Geräusch in ein elektrisches Signal umzuwandeln, das über die Verstärkungs-Filterungs-Gleichrichtungsschaltung in den Prozessor eintritt, der Prozessor konfiguriert ist, um einen Geräuschwert des Geräuschs basierend auf dem elektrischen Signal zu berechnen, wobei ein Geräusch-Alarmwert in dem Prozessor eingestellt ist;

die Wärmebild-Anzeigeeinrichtung einen Wärmebildsensor umfasst, der Wärmebildsensor in dem Entfernungsmesser-Körper angeordnet ist, der Wärmebildsensor über den Prozessor mit einem Display (6) verbunden ist, das Display (6) an der Seite des Entfernungsmesser-Körpers angeordnet ist und das Display (6) klappbar mit einer Oberfläche des Entfernungsmesser-Körpers verbunden ist;

der Prozessor ferner konfiguriert ist, um: in Reaktion darauf, dass der Geräuschwert des Geräuschs größer als der Geräusch-Alarmwert ist, einen Bildschirm des Displays (6) blinken zu lassen, um einen Jäger zum Rückzug zu veranlassen;

der Prozessor konfiguriert ist, um: wenn der Schusskompensations-Entfernungsmessmodus ausgelöst wird, eine Schusskompensationsentfernung zu erhalten; und wenn der Basis-Entfernungsmessmodus ausgelöst wird, eine Zieldistanz zu erhalten;

der Entfernungsmesser-Körper ferner ein Okular (10) mit einer darauf angebrachten Okulareinstellung (9) umfasst, wobei das Okular (10) am vorderen Ende des Entfernungsmesser-Körpers angeordnet ist und eine Objektivbaugruppe am hinteren Ende des Entfernungsmesser-Körpers angeordnet ist, eine Abdeckung (4) auf dem Entfernungsmesser-Körper angeordnet ist und die Abdeckung (4) mit einem Gehäuse (5) des Entfernungsmesser-Körpers zur Abdichtung verbunden ist;

die Messmodus-Komponente mit einem Laufzeit-(TOF)-Messmodul verbunden ist, das TOF-Messmodul mit dem Prozessor und der Objektivbaugruppe verbunden ist[, und das TOF-Messmodul konfiguriert ist, um die Zieldistanz zu messen;

wenn der Schusskompensations-Entfernungsmessmodus durch einen Benutzer ausgelöst wird, die Schusskompensationsentfernung gemäß einer Formel 3 erhalten wird:

$$\text{Schusskompensationsentfernung} = \text{Zieldistanz} \times k \times (\text{Windgeschwindigkeit} \times \text{Zieldistanz} / m) \qquad \text{(Formel 3)}$$

wobei k einen Schusskompensationskoeffizienten darstellt und m einen Proportionalitätskoeffizienten darstellt.

2. Teleskop-Entfernungsmesser nach Anspruch 1, wobei der Entfernungsmesser-Körper darin ferner mit einer Stromversorgungsbaugruppe versehen ist, die Stromversorgungsbaugruppe konfiguriert ist, um den gesamten Teleskop-Entfernungsmesser mit Strom zu versorgen, wobei die Stromversorgungsbaugruppe eine Ladeschnittstelle (13), eine Ladeanzeigeleuchte (12), einen durch die Ladeschnittstelle (13) geladenen Lithium-Akkumulator und eine Ladestromschaltung umfasst; und die Ladeschnittstelle (13) konfiguriert ist, um den Lithium-Akkumulator über die Ladestromschaltung zu laden.

3. Ein Entfernungsmessverfahren unter Verwendung des Teleskop-Entfernungsmessers nach Anspruch 1, umfassend:

S1, wenn der Teleskop-Entfernungsmesser eingeschaltet wird, Initialisieren, durch den Prozessor des Teleskop-Entfernungsmessers, von Parametern des Teleskop-Entfernungsmessers, Erfassen, durch den Wärmebildsensor, eines Wärmebilds vor dem Teleskop-Entfernungsmesser und Anzeigen des Wärmebilds auf dem Display (6) über den Prozessor;

S2, Auswählen, durch den Benutzer, des Schusskompensations-Entfernungsmessmodus oder des Basis-Entfernungsmessmodus durch Betätigen des Modusumschaltknopfs (7), um eine entsprechende Entfernungsmessung durchzuführen und dadurch die Zieldistanz zu erhalten; und

S3, Erhalten, durch die Windgeschwindigkeitsmesseinrichtung, der Windgeschwindigkeit in einer aktuellen Umgebung und Erhalten einer endgültigen zu messenden Entfernung basierend auf der Windgeschwindigkeit; wobei das Erhalten einer endgültigen zu messenden Entfernung basierend auf der Windgeschwindigkeit in S3 umfasst:

in einer Situation, in der die Windgeschwindigkeit in der aktuellen Umgebung eine Schussbahn während eines Jagdvorgangs nicht beeinflusst, Verwenden der Zieldistanz als die endgültige zu messende Entfernung;

in einer Situation, in der die Windgeschwindigkeit in der aktuellen Umgebung die Schussbahn beeinflusst, Berechnen der Schusskompensationsentfernung basierend auf der durch das Windrad (1) erhaltenen Windgeschwindigkeit und der Zieldistanz und Verwenden der Schusskompensationsentfernung als die endgültige zu messende Entfernung.

4. Entfernungsmessverfahren nach Anspruch 3, wobei die Parameter in S1 einen Arbeitsmodus, eine Arbeitsfrequenz, einen Geräuschfilterungsparameter des TOF-Messmoduls, Windgeschwindigkeits-Kalibrierungsparameter k und b und den Proportionalitätskoeffizienten m umfassen.

**Revendications**

1. Télémètre à télescope, comprenant un corps de télémètre,

un côté d'une partie supérieure du corps du télémètre est pourvu d'un dispositif de mesure de la vitesse du vent, un autre côté de la partie supérieure du corps du télémètre est pourvu d'un composant de mode de mesure, **caractérisé en ce que**, le composant de mode de mesure possède un mode de télémétrie de base et un mode de télémétrie avec compensation de tir, le composant de mode de mesure comprend un bouton de mesure de mise sous tension (8) et un bouton de commutation de mode (7), le bouton de mesure de mise sous tension (8) est configuré pour commander au télémètre à télescope d'effectuer une télémétrie, le bouton de commutation de mode (7) est configuré pour sélectionner le mode de télémétrie de base et le mode de télémétrie avec compensation de tir, une extrémité avant du corps du télémètre est pourvue d'un dispositif de mesure du bruit, et un côté du corps du télémètre est pourvu d'un dispositif d'affichage d'image thermique; le dispositif de mesure de la vitesse du vent comprend un cadre, des interstices sont disposés sur le cadre, une roue à aubes (1) est disposée dans le cadre, la roue à aubes (1) est connectée à un tachymètre, et le tachymètre est connecté à un processeur dans le corps du télémètre; le processeur est configuré pour : en réponse à la rotation de la roue à aubes (1), obtenir une vitesse du vent à un moment actuel selon une formule 1:

$$\text{vitesse du vent} = \text{vitesse de rotation} \times k + b \text{ (formule 1)};$$

où la vitesse de rotation représente les données obtenues par le tachymètre, et k et b représentent des paramètres d'étalonnage de la vitesse du vent; le dispositif de mesure du bruit comprend un microphone (11), le microphone (11) est connecté à un circuit d'amplification-filtrage-redressement, le circuit d'amplification-filtrage-redressement est connecté au processeur, le microphone (11) est configuré pour convertir un bruit en un signal électrique pour entrer dans le processeur par l'intermédiaire du circuit d'amplification-filtrage-redressement, le processeur est configuré pour calculer une valeur de bruit du bruit sur la base du signal électrique, une valeur d'alarme de bruit est définie dans le processeur; le dispositif d'affichage d'image thermique comprend un capteur d'image thermique, le capteur d'image thermique est disposé dans le corps du télémètre, le capteur d'image thermique est connecté à un afficheur (6) par l'intermédiaire du processeur, l'afficheur (6) est disposé sur le côté du corps du télémètre, et l'afficheur (6) est connecté de manière pliable à une surface du corps du télémètre; le processeur est en outre configuré pour : en réponse à la valeur de bruit du bruit étant supérieure à la valeur d'alarme de bruit, commander à un écran de l'afficheur (6) de clignoter pour avertir un chasseur de s'échapper; le processeur est configuré pour: lorsque le mode de télémétrie avec compensation de tir est déclenché, obtenir une distance de compensation de tir ; et lorsque le mode de télémétrie de base est déclenché, obtenir une distance cible; le corps du télémètre comprend en outre un oculaire (10) avec une bague d'ajustement d'oculaire (9) sur celui-ci, l'oculaire (10) est disposé à l'extrémité avant du corps du télémètre, et un ensemble de lentilles d'objectif est disposé à une extrémité arrière du corps du télémètre, un couvercle supérieur (4) est disposé sur le corps du télémètre, et le couvercle supérieur (4) est connecté à un boîtier (5) du corps du télémètre pour assurer l'étanchéité; le composant de mode de mesure est connecté à un module de mesure du temps de vol (TOF), le module de mesure TOF est connecté au processeur et à l'ensemble de lentilles d'objectif, et le module de mesure TOF est configuré pour mesurer la distance cible; lorsque le mode de télémétrie avec compensation de tir est déclenché par un utilisateur, la distance de compensation de tir est obtenue selon une formule 3:

$$\text{distance de compensation de tir} = \text{distance cible} \times k \times (\text{vitesse du vent} \times \text{distance cible} / m) \qquad \text{(formule 3)};$$

où k représente un coefficient de compensation de tir, et m représente un coefficient de proportionnalité.

2. Télémètre à télescope selon la revendication 1, dans lequel le corps du télémètre est également pourvu d'un ensemble d'alimentation électrique à l'intérieur, l'ensemble d'alimentation électrique est configuré pour alimenter en énergie l'ensemble du télémètre à télescope, l'ensemble d'alimentation électrique comprend une interface de chargement (13), un témoin lumineux de chargement (12), une batterie au lithium chargée par l'interface de chargement (13), et un circuit de chargement ; et l'interface de chargement (13) est configurée pour charger la batterie au lithium par l'intermédiaire du circuit de chargement.

3. Procédé de télémétrie utilisant le télémètre à télescope selon la revendication 1, comprenant:

S1, lorsque le télémètre à télescope est mis sous tension, initialisation, par le processeur du télémètre à télescope, des paramètres du télémètre à télescope, collecte, par le capteur d'image thermique, d'une image thermique devant le télémètre à télescope, et affichage de l'image thermique sur l'afficheur (6) par l'intermédiaire du processeur;

S2, sélection, par l'utilisateur, du mode de télémétrie avec compensation de tir ou du mode de télémétrie de base en déclenchant le bouton de commutation de mode (7), pour effectuer une télémétrie correspondante, et ainsi obtenir la distance cible; et

S3, obtention, par le dispositif de mesure de la vitesse du vent, de la vitesse du vent dans un environnement actuel, et obtention d'une distance finale à mesurer sur la base de la vitesse du vent;

dans lequel l'obtention d'une distance finale à mesurer sur la base de la vitesse du vent dans S3 comprend:

dans une situation où la vitesse du vent dans l'environnement actuel n'affecte pas une trajectoire de tir dans un processus de chasse, prise de la distance cible comme distance finale à mesurer;

dans une situation où la vitesse du vent dans l'environnement actuel affecte la trajectoire de tir, calcul de la distance de compensation de tir sur la base de la vitesse du vent obtenue par la roue à aubes (1) et de la distance cible, et prise de la distance de compensation de tir comme distance finale à mesurer.

4. Procédé de télémétrie utilisant le télémètre à télescope selon la revendication 3, dans lequel les paramètres dans S1 comprennent un mode de fonctionnement, une fréquence de fonctionnement, un paramètre de filtrage du bruit du module de mesure TOF, les paramètres d'étalonnage de la vitesse du vent k et b, et le coefficient de proportionnalité m.

FIG. 1

FIG. 2

FIG. 3

**EP 4 379 308 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115531845 B
- US 20150369565 A1
- US 20140063261 A1